# EUROPEAN PATENT APPLICATION

(11) **EP 4 606 848 A1**
(43) Date of publication of application: **27.08.2025**
(21) Application number: 24832294.3
(22) Date of filing: 03.06.2024
(51) Int. Cl.: C08J 7/04, C08J 5/18, C09D 183/04, C08G 77/16, C08G 77/20, B26D 7/08

(54) **FILM FOR LITHIUM METAL PUNCHING AND LITHIUM METAL PUNCHING METHOD USING SAME**

(30) Priority: 30.06.2023 KR 20230084812
(71) Applicant: LG Energy Solution, Ltd., Seoul 07335 (KR)
(72) Inventor: LEE, Mijin, Daejeon 34122 (KR); LEE, Changhoon, Daejeon 34122 (KR)
(74) Representative: Hoffmann Eitle
(86) International application number: PCT/KR2024/007553
(87) International publication number: WO 2025/005513

(57) **Abstract**

The present invention provides a film for punching lithium metal which can be easily separated since lithium metal does not adhere to a lower release film provided on a lower portion of the lithium metal when the lithium metal is punched by an ultrasonic cutting method, and a method for punching lithium metal using the same. The film for punching lithium metal is located on a lower part of the lithium metal when the lithium metal is ultrasonically cut, and comprises a PET base material; and a silicone coating layer located on a surface of the PET base material.

## Description

### [Technical Field]

This application claims the benefit of priority to Korean Patent Application No. 10-2023-0084812, filed June 30, 2023, the disclosures of which are incorporated herein by reference in their entirety.

The present invention relates to a release film provided on a lower portion of lithium metal when lithium metal is punched using ultrasonic cutting equipment, and more particularly to a film for punching lithium metal that does not allow lithium metal to adhere to the lower release film provided on the lower portion of lithium metal when lithium metal is punched using an ultrasonic cutting method, and to a method for punching lithium metal using the film.

### [Background Art]

As the interest in energy storage technologies continues to grow, with applications extending to mobile phones, tablets, laptops and camcorders, and energy for electric vehicles (EVs) and hybrid electric vehicles (REVs), research and development on electrochemical devices is increasing. In this regard, electrochemical devices are getting the most attention, and among them, the development of lithium-based secondary batteries, such as rechargeable lithium-sulfur batteries, lithium-ion batteries, and lithium-ion polymer batteries, has been a focus of attention, and has recently led to research and development of new electrodes and cell designs to improve the capacity density and specific energy of these batteries.

These lithium-based secondary batteries typically contain lithium metal, which has a very high energy density, as the negative electrode active material. In order to apply the lithium metal as the negative electrode active material, it is necessary to firstly punch the lithium metal to a certain size. In general, there are contact and non-contact methods of punching lithium metal. In the case of contact method, it can be classified into mold method, which uses a punch that is shaped like an electrode, and ultrasonic horn method, which is shaped like an electrode. In the case of contact method, parts of the material and the equipment are in direct contact, so the material may be damaged and the equipment may be stained with parts of the material or debris. Non-contact methods include laser punching, which allows cutting without direct contact with the material, thereby minimizing damage to the material and the possibility of material or debris on the equipment, but depending on the material used, laser cutting may cause oxidation or dust generation.

For the materials used in the present invention, a laser cutting method is preferred to minimize damage to the material, but since the lithium metal may be oxidized and dust may be generated in the area in contact with the material during laser irradiation, the laser cutting method is not a suitable method for punching due to safety issues. Therefore, it is necessary to eliminate the above problems by using ultrasonic punching, which direct contacts with the material but minimizes the problem of material getting on the equipment and causes less damage to the material.

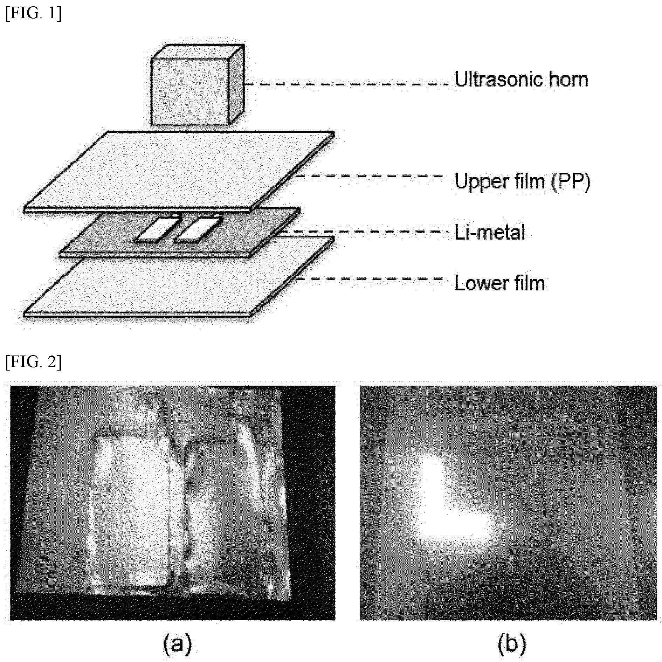

FIG. 1 is a schematic illustration of the ultrasonic method for punching lithium metal, in which a release film (upper film, lower film) is placed on the top and bottom of the lithium metal, respectively, as shown in FIG. 1, and ultrasonic waves cut the lithium metal (an electrode-shaped mold is placed on top of the upper film).

The upper film is used to prevent the lithium metal from sticking to the ultrasonic horn. The lower film is used to prevent the ultrasonic waves from penetrating the lithium metal and damaging the lowest stage when cutting the lithium metal. However, in this case, the lithium metal sticks to the lower film and cannot be easily separated during ultrasonic cutting. Therefore, it is necessary to find a way to prevent the lithium metal from sticking to the lower film so that the lithium metal can be easily separated when cutting the lithium metal using an ultrasonic cutting method.

### [Disclosure]

### [Technical Problem]

Accordingly, the object of the present invention is to provide a film for punching lithium metal in which lithium metal does not adhere to a lower release film provided on a lower part of the lithium metal when punching lithium metal by ultrasonic cutting method, and a method for punching lithium metal using same.

### [Technical solution]

In order to achieve the above objectives, the present invention provides a film for punching lithium metal located on a lower portion of the lithium metal when ultrasonic cutting the lithium metal, comprising: a PET base material; and a silicone coating layer located on a surface of the PET base material.

The present invention also provides a method for punching lithium metal, comprising: (a) sequentially stacking the lithium metal punching film (or a lower release film), lithium metal, one or more molds, and an upper release film; and (b) spacing apart an ultrasonic horn on an upper surface of the upper release film, and then irradiating with ultrasonic waves to cut the lithium metal into a shape identical to a shape of the mold.

### [Advantageous Effects]

According to the lithium metal release film and the method for punching lithium metal using the film according to the present invention, when lithium metal is punched by ultrasonic cutting method, the lithium metal is not stuck to the lower release film provided on the lower part of the lithium metal, and the film has the advantage of being easily separated.

### [Description of Drawings]

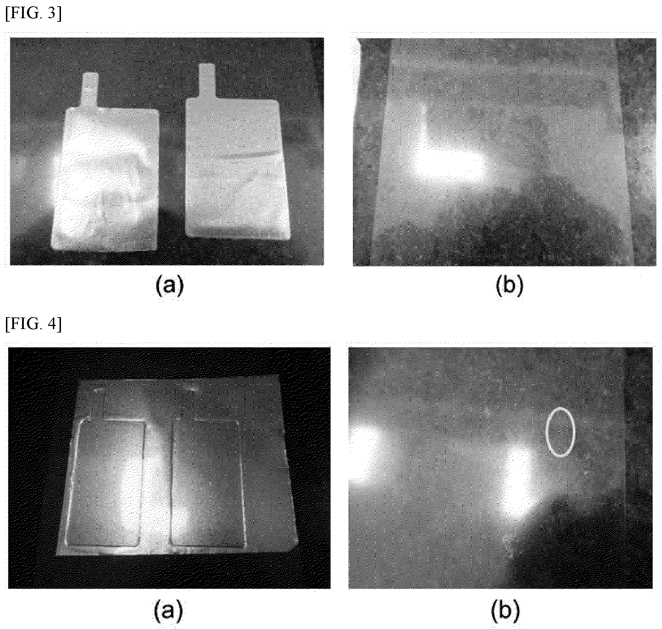

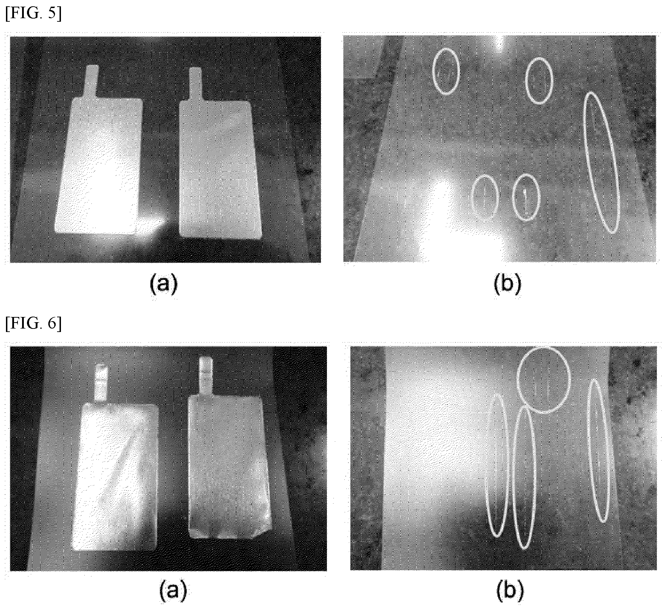

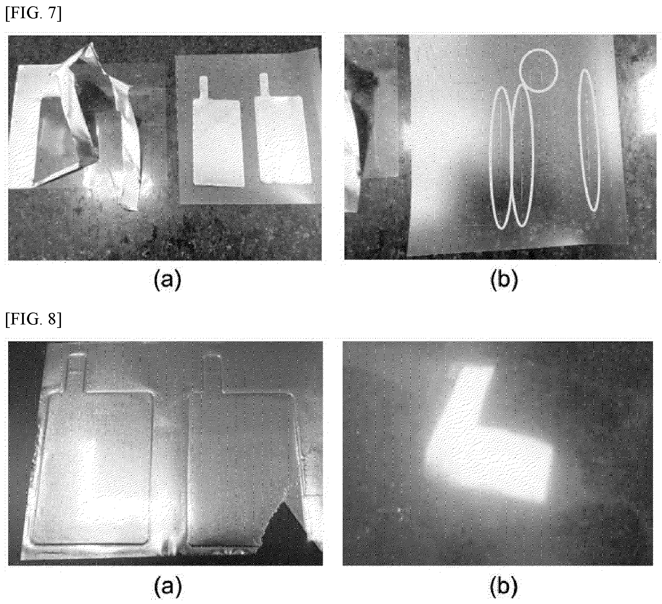

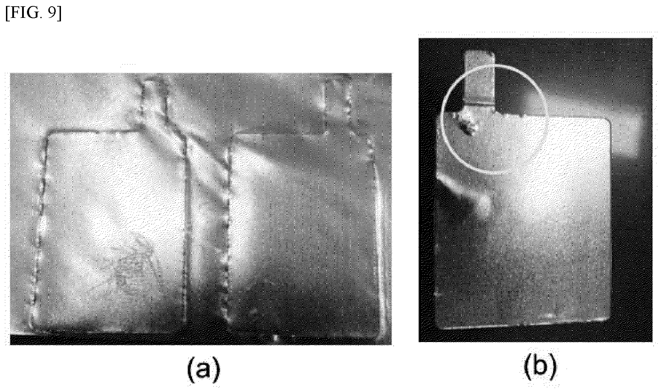

FIG. 1 is an exploded view drawing of punching lithium metal using ultrasonic waves.
a in FIG. 2 is an image of the punched form after separating the lithium metal of Example 1 from the lower film, and b in FIG. 2 is an image of the lower film after separating the punched lithium metal of Example 1 from the lower film.
a in FIG. 3 is an image of the punched form after separating the lithium metal of Example 2 from the lower film, and b in FIG. 3 is an image of the lower film after separating the punched lithium metal of Example 2 from the lower film.
a in FIG. 4 is an image of the punched form after separating the lithium metal of Comparative Example 1 from the lower film, and b in FIG. 4 is an image of the lower film after separating the punched lithium metal of Comparative Example 1 from the lower film.
a in FIG. 5 is an image of the punched form after separating the lithium metal of Comparative Example 2 from the lower film, and b in FIG. 5 is an image of the lower film after separating the punched lithium metal of Comparative Example 2 from the lower film.
a in FIG. 6 is an image of the punched form after separating the lithium metal of Comparative Example 3 from the lower film, and b in FIG. 6 is an image of the lower film after separating the punched lithium metal of Comparative Example 3 from the lower film.
a in FIG. 7 is an image of the punched form after separating the lithium metal of Comparative Example 4 from the lower film, and b in FIG. 7 is an image of the lower film after separating the punched lithium metal of Comparative Example 4 from the lower film.
a in FIG. 8 is an image of the punched form after separating the lithium metal of Comparative Example 5 from the lower film, and b in FIG. 8 is an image of the lower film after separating the punched lithium metal of Comparative Example 5 from the lower film.
a in FIG. 9 is an image of the punched form after separating the lithium metal of Comparative Example 6 from the lower film, and b in FIG. 9 is an image of the lower film after separating the punched lithium metal of Comparative Example 6 from the lower film.

### [Best Mode]

The present invention will now be described in detail.

A film for punching lithium metal according to the present invention, which is positioned on a lower part of the lithium metal when ultrasonically cutting the lithium metal, comprises a PET base material and a silicone coating layer located on a surface of the PET base material.

Lithium-based secondary batteries typically contain lithium metal, which has a very high energy density, as a negative electrode active material. In order to apply the lithium metal as a negative electrode active material, it is necessary to firstly punch lithium metal to a certain specification. In general, there are contact and non-contact methods of punching lithium metal. In the case of contact method, it can be classified into mold method, which uses a punch that is shaped like an electrode, and ultrasonic horn method, which is shaped like an electrode. In the case of contact method, parts of the material and the equipment are in direct contact, so the material may be damaged and the equipment may be stained with parts of the material or debris. Non-contact methods include laser punching, which allows cutting without direct contact with the material, thereby minimizing damage to the material and the possibility of material or debris on the equipment, but depending on the material used, laser cutting may cause oxidation or dust generation.

For the materials used in the present invention, a laser cutting method is preferred to minimize damage to the material, but since the lithium metal may be oxidized and dust may be generated in the area in contact with the material during laser irradiation, the laser cutting method is not a suitable method for punching due to safety issues. Therefore, it is necessary to eliminate the above problems by using ultrasonic punching, which direct contacts with the material but minimizes the problem of material getting on the equipment and causes less damage to the material.

In the ultrasonic method for punching lithium metal, as shown in FIG. 1, a release film (upper film, lower film) is placed on the top and bottom of the lithium metal, respectively, and ultrasonic waves cut the lithium metal (an electrode-shaped mold is placed on top of the upper film). In this case, the upper film is made of polypropylene (PP) for the purpose of preventing the lithium metal from sticking to the ultrasonic horn. The lower film is mainly made of polyethylene terephthalate (PET) for the purpose of preventing the ultrasonic waves from penetrating the lithium metal and damaging the lowest stage when cutting the lithium metal. However, in this case, since the ultrasonic horn penetrates not only the lithium metal but also the lower film during ultrasonic cutting, the lithium metal sticks to the lower film and cannot be easily separated during ultrasonic cutting. Therefore, the applicant of the present invention has invented a method of preventing the lithium metal from sticking to the lower film so that the lithium metal can be easily separated when cutting the lithium metal using an ultrasonic cutting method.

A film for punching lithium metal according to the present invention, more specifically, a "lower film for punching lithium metal," which is positioned on the lower part of the lithium metal when ultrasonically cutting the lithium metal, comprising a PET (polyethylene terephthalate) base material and a silicone coating layer located on the surface of the PET base material.

The PET base material constitutes a conventional "lower film for punching lithium metal," and the "lower film for punching lithium metal" of the present invention has a silicone coating layer on the surface of the PET base material. In other words, when the surface of the PET base material is coated with silicone as described above, the lithium metal does not stick to the lower (release) film provided on the lower part of the lithium metal when the lithium metal is punched by ultrasonic cutting.

The silicone coating layer may be located on only a portion of the surface of the PET base material, or it may be located on the entire surface of the PET base material. However, it is preferred that the silicone coating layer is located on the entire surface of the PET base material in order to easily separate the lithium metal without sticking thereof.

The content of silicone contained in the silicone coating layer may be 4 to 50% by weight, preferably 4 to 30% by weight, more preferably 5 to 20% by weight, with respect to the total weight of the film for punching lithium metal. If the content of silicone contained in the silicone coating layer is less than 4% by weight with respect to the total weight of the film for punching lithium metal, the benefits of coating the base material with silicone may not be realized. Furthermore, if the content of silicone contained in the silicone coating layer is greater than 50% by weight of the total weight of the film for punching lithium metal, no further effect may be seen.

Further, the thickness of the silicone coating layer may be 0.01 to 25 µm, preferably 0.02 to 20 µm, more preferably 0.03 to 20 µm, based on a thickness of 50 µm of the PET base material. If the thickness of the silicone coating layer is less than 0.01 µm based on a thickness of 50 µm of the PET base material, the benefits of coating the base material with silicone may not be obtained. Furthermore, if the thickness of the silicone coating layer exceeds 25 µm based on a thickness of 50 µm of the PET base material, no further effect may appear.

The silicones included in the silicone coating layer may be selected from the group consisting of aqueous silicones, super-acidic oily silicones, non-super-acidic oily silicones, biosilicones, heat-resistant silicones and urethane silicones. Moreover, one or more of alkenyl polysiloxanes and hydrogen polysiloxanes may be most advantageous in terms of achieving the objectives of the present invention.

Furthermore, the surface of the silicone coating layer may be flat or may have the form of an embossing with a plurality of protrusions. However, considering that uniform cutting characteristics are required when cutting lithium metal, it may be preferable to have a flat surface of the silicone coating layer.

Meanwhile, the silicone coating layer may further comprise a crosslinking agent as required. When the crosslinking agent is included in the silicone coating layer, the crosslinking agent may be included in an amount of 0.001 to 0.8 parts by weight per 100 parts by weight of the total weight of the film for punching lithium metal. Depending on the degree of crosslinking, the surface properties and peeling tendency of the film may vary. In the case of a silicone release film with a high cross-linking density, the physical penetration of the adhesive can be prevented to prevent increase of change with the passage of time on peel force, but since the surface is hard, it may not absorb shock well during peeling and may exhibit an unstable peeling tendency. On the other hand, in the case of a release film with low cross-linking density, a relatively soft surface is formed, which makes a smooth shock absorption during peeling and a stable peeling tendency, but problems may occur due to the increase of change with the passage of time on peel force due to physical penetration of adhesive.

Next, a method of punching lithium metal using a lithium metal punching film according to the present invention will be described. The method for punching lithium metal using the above-described lithium metal punching film includes (a) sequentially stacking the above-described lithium metal punching film (or lower release film), lithium metal, one or more molds, and an upper release film, and (b) spacing apart an ultrasonic horn on the upper side of the upper release film, and then irradiating with ultrasonic waves to cut the lithium metal into a shape identical to the shape of the mold.

In the method of punching lithium metal using the film for punching lithium metal of the present invention, the order of laminating the substrates and the ultrasonic irradiation process are not different from the conventional ones. However, the present invention differs from the conventional lower film, as described above. Furthermore, the method of punching lithium metal using the film for punching lithium metal has a key feature in the depth of ultrasonic irradiation (horn depth), which will be described below.

In other words, in the past, when using ultrasonic waves to punch lithium metal, the depth of the ultrasonic waves was generally around 0.1 mm, and to this day, no attempt has been made to increase the depth of the ultrasonic waves. This is because the problem of adhesion of lithium metal due to the ultrasonic irradiation depth is not recognized. However, the applicant of the present invention has derived the optimal ultrasonic irradiation depth through repeated and diverse approaches and attempts.

In the present invention, the ultrasonic irradiation depth is between 0.075 and 0.080 mm. If the depth of ultrasonic irradiation is less than 0.075 mm, the depth of ultrasonic irradiation is insufficient, which may cause the lithium metal to tear instead of being separated according to the shape of the mold when the punched lithium metal is removed. In addition, if the ultrasonic irradiation depth exceeds 0.080 mm, the lithium metal is easily torn even if it is separated according to the shape of the mold due to the excessive depth of irradiation, and there is also a problem of lithium metal sticking to the lower film, which may cause burrs across the edge of the electrode.

Therefore, by using the lithium metal release film (i.e., the lower release film) of the present invention and irradiating it with ultrasonic waves at a depth of 0.075 to 0.080 mm, the lithium metal is not further adhered to the lower release film, making it easier to separate the lithium metal.

The lithium metal produced by the above "method for punching lithium metal" can be applied as a negative electrode active material for a lithium-based secondary battery. However, it is obvious that the present invention can also be applied in other fields other than the battery field where it is necessary to punch lithium metal.

The following describes relevant secondary batteries based on the case where the lithium metal produced by the above-mentioned "method of punching lithium metal" is applied as a negative electrode active material in a lithium-based secondary battery.

If the lithium-based secondary battery is a lithium-sulfur battery, sulfur may be included as a positive electrode active material, and sulfur-carbon composites including carbon materials are also applicable as positive electrode active materials. If the lithium-based secondary battery is a lithium-ion battery, the positive electrode active material may include lithium cobalt oxides (LiCoO₂), lithium nickel oxides (LiNiO₂), lithium manganese oxides (LiMnO₂, LiMn₂O₄, etc.), lithium iron phosphate compounds (LiFePO₄), and lithium nickel cobalt manganese-based positive electrode active materials (or lithium NCM-based positive electrode active materials, or NCM-based lithium composite transition metal oxides, or high Ni positive electrode materials). In addition to the above positive electrode active materials, the positive electrode may further comprise binders and conductive materials.

The binder is a component that aids in the binding of the positive electrode active material and the conductive material and the binding to the current collector, and, for example, at least one selected from the group consisting of polyvinylidene fluoride (PVdF), polyvinylidene fluoride-polyhexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorinated rubber, carboxymethyl cellulose (CMC), starch, hydroxypropyl cellulose, regenerated cellulose, and mixtures thereof, can be used, but not limited threreto.

The binder is typically added in an amount of 1 to 50 parts by weight, preferably 3 to 15 parts by weight, based on 100 parts by weight of the total weight of the positive electrode. A content of less than 1 part by weight of the binder may result in insufficient adhesion of the positive electrode material to the current collector, and a content of more than 50 parts by weight may result in improved adhesion but a corresponding decrease in the content of the positive electrode material, resulting in lower cell capacity.

The conductive material included in the positive electrode is not particularly limited as long as it has excellent electrical conductivity without causing side reactions in the internal environment of the battery and without causing any chemical changes in the battery, and graphite or conductive carbon can be used as a representative. For example, graphite such as natural graphite, artificial graphite, and the like; carbon black such as carbon black, acetylene black, ketjen black, denka black, thermal black, channel black, furnace black, lamp black, and the like; carbon-based materials having a crystal structure of graphene or graphite; conductive fibers, such as carbon fibers and metal fibers; carbon fluoride; metal powders, such as aluminum powder and nickel powder; conductive whiskers, such as zinc oxide and potassium titanate; conductive oxides, such as titanium oxide; and conductive polymers, such as polyphenylene derivatives may be used alone or in a mixture of two or more of the foregoing, but are not necessarily limited thereto.

The conductive material is typically added in an amount of 0.5 to 50 parts by weight, preferably 1 to 30 parts by weight, based on 100 parts by weight of the total weight of the positive electrode. If the amount of the conductive material is too small, less than 0.5 parts by weight, the effect of improving the electrical conductivity may be difficult to expect or the electrochemical properties of the battery may be degraded, and if the amount of the conductive material is too large, more than 50 parts by weight, the amount of positive electrode material may be relatively small, resulting in a decrease in capacity and energy density. The method of incorporating the conductive material into the positive electrode is not substantially limited, and any conventional method known in the art can be used, such as coating the positive electrode material. Additionally, if desired, the addition of a second conductive coating layer to the positive electrode material may be substituted for the addition of a conductive material as described above.

Furthermore, the positive electrode may optionally have a filler added as a component to inhibit its expansion. Such a filler is not particularly limited as long as it is capable of suppressing the expansion of the electrode without causing chemical changes in the battery, and can be, for example, an olefin-based polymer such as polyethylene or polypropylene; a fibrous material such as glass fiber or carbon fiber; or the like.

The positive electrode can be manufactured by dispersing and mixing the positive electrode material, binder and conductive material in a dispersant (solvent) to form a slurry, applying it to the positive electrode current collector, and then drying and rolling it. NMP (N-methyl-2-pyrrolidone), DMF (dimethyl formamide), DMSO (dimethyl sulfoxide), ethanol, isopropanol, water, and mixtures thereof can be used as the dispersant, but not necessarily limited thereto.

The positive electrode current collectors include platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), In doped SnO₂ (ITO), F doped SnO₂ (FTO), and alloys thereof, and aluminum (Al) or a stainless steel whose surface is treated with carbon (C), nickel (Ni), titanium (Ti) or silver (Ag), but not necessarily limited thereto. The positive electrode current collector may be in the form of foil, film, sheet, punched, porous, foam, or the like.

The negative electrode can be prepared according to conventional methods known in the art. For example, the negative electrode can be prepared by dispersing and mixing a negative electrode active material, a conductive material, a binder, and optionally a filler in a dispersant (solvent) to form a slurry, applying it to a negative electrode current collector, and then drying and rolling it. As the negative electrode active material, the lithium metal punched according to the present invention can be applied, and compounds capable of reversible intercalation and deintercalation of lithium can be used together. Specific examples include carbonaceous materials such as artificial graphite, natural graphite, graphitized carbon fiber, amorphous carbon, etc.; metallic compounds capable of alloying with lithium such as Si, Al, Sn, Pb, Sb, Zn, Bi, In, Mg, Ga, Cd, Si alloys, Sn alloys or Al alloys; metal compounds capable of doping or de-doping lithium such as SiO_{β} (wherein 0 < β < 2), SnO₂ , vanadium oxide, or lithium vanadium oxide; or composites comprising the metallic compounds and carbonaceous materials, such as a Si-C composite or a Sn-C composite, any one of which or a mixture of two or more of which may be used. Furthermore, both low-crystalline carbon and high-crystalline carbon can be used as carbon materials. Examples of low-crystalline carbons include soft carbon and hard carbon, while examples of high-crystalline carbons include amorphous, plate-like, in-plane, spherical, or fibrous natural or artificial graphite, Kish graphite, pyrolytic carbon, mesophase pitch based carbon fiber, meso-carbon microbeads, mesophase pitches, and high temperature calcined carbon such as petroleum or coal tar pitch derived cokes.

Furthermore, the binders and conductive materials used for the negative electrode may be the same as those described above for the positive electrode. The negative electrode current collectors may include, but are not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), and alloys thereof, and copper (Cu) or stainless steel whose surface is treated with carbon (C), nickel (Ni), titanium (Ti), or silver (Ag). The negative electrode current collector may be in the form of foil, film, sheet, punched, porous, foam, or the like.

As a separator, olefin-based polymers such as polyethylene, polypropylene, or glass fibers can be used in the form of sheets, multilayers, microporous films, woven or nonwoven fabrics, but are not necessarily limited thereto. However, it may be preferable to apply a porous polyethylene or a porous glass filter as a separator, and it may be even more preferable to apply a porous glass filter as a separator.

On the other hand, when a solid electrolyte (e.g., an organic solid electrolyte, or an inorganic solid electrolyte) such as a polymer is used as an electrolyte, the solid electrolyte may also serve as a separator. Specifically, an insulating thin film having high ionic permeability and mechanical strength is used. The pore diameter of the separator may generally be in the range of 0.01 to 10 µm and the thickness may generally be in the range of 5 to 300 µm, but they are not limited thereto.

The electrolyte or electrolyte solution may include, but is not necessarily limited to, carbonates, esters, ethers, or ketones as non-aqueous electrolytes (non-aqueous organic solvents), which are used either alone or in a mixture of two or more. For example, non-amphoteric organic solvents such as dimethyl carbonate, diethyl carbonate, dipropyl carbonate, methylpropyl carbonate, ethylpropyl carbonate, methylethyl carbonate, ethylene carbonate, propylene carbonate, butylene carbonate, gamma butyrolactone, n-methyl acetate, n-ethyl acetate, n-propyl acetate, phosphoric acid triesters, dibutyl ether, N-methyl-2-pyrrolidinone, 1,2-dimethoxyethane, tetrahydrofuran derivatives such as 2-methyl tetrahydrofuran, dimethyl sulfoxide, formamide, dimethylformamide, dioxolane and derivatives thereof, acetonitrile, nitromethane, methyl formate, methyl acetate, trimethoxy methane, sulfolane, methyl sulfolane, 1,3-dimethyl-2-imidazolidinone, methyl propionate, or ethyl propionate may be used, but not necessarily limited thereto.

Further lithium salts can be added to the above electrolyte (so-called lithium salt-containing non-aqueous electrolyte), and the lithium salts include those known in the art that are well soluble in non-aqueous electrolytes, such as LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium low aliphatic carboxylate, lithium tetraphenylborate, and lithium imide, but not necessarily limited thereto. The (non-aqueous) electrolyte may contain, for example, pyridine, triethylphosphite, triethanolamine, cyclic ether, ethylenediamine, glyme-based compounds, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrroles, 2-methoxyethanol, and aluminum trichloride, for the purpose of improving charge and discharge properties, flame retardancy, etc. Optionally, a halogen-containing solvent such as carbon tetrachloride or ethylene trifluoride may be further included to impart non-flammability, or carbon dioxide gas may be further included to improve high temperature preservation properties.

Alternatively, the secondary battery can be manufactured according to methods known in the art. For example, it can be manufactured by placing a porous separator between the positive electrode and negative electrode, and adding a non-aqueous electrolyte solution. The secondary battery according to the present invention can be applied to a battery cell used as a power source for small devices, and is particularly suitable as a unit cell in a battery module used as a power source for medium to large devices. In this respect, the present invention also provides a battery module comprising two or more secondary batteries electrically connected (in series or in parallel). The quantity of secondary batteries included in the battery module may of course be varied, taking into account the use and capacity of the battery module.

Further, the present invention provides a battery pack electrically connected to the battery module in accordance with the art of the field. The battery module and battery pack can be used as a power of one or more of the following medium to large devices: a power tool; an electric vehicle, including an electric vehicle (EV), a hybrid electric vehicle (HEV), and a plug-in hybrid electric vehicle (PHEV); an electric truck; an electric commercial vehicle; or a power storage system.

Although the present invention has been described with reference to preferred examples as described above, it will be readily understood by those skilled in the art that the present invention is not limited thereto and that various modifications and variations can be made as long as they do not depart from the concepts and scope of the patent claims set forth below.

### [Example 1] Punching lithium metal using a silicone coated lower film

First, a 75 µm thick lower release film in which the entire surface of the PET base material was coated with silicone, lithium metal (GF-60, Mg 3%), and a 40 µm thick upper release film (PP) were sequentially laminated. Then, an ultrasonic horn was spaced apart on the top of the upper release film and ultrasonically irradiated (Demo equipment, frequency: 28.5 KHz, horn depth: 0.075 mm) to punch the lithium metal. Meanwhile, the PET base material was coated with silicone in an amount of 5% by weight based on 100% by weight of the total weight of the lower release film.

### [Example 2] Punching lithium metal using a silicone coated lower film

The same procedure as in Example 1 above was performed to punch the lithium metal, except that the ultrasonic irradiation depth (horn depth) was changed from 0.075 mm to 0.080 mm.

### [Comparative Example 1] Punching lithium metal using a conventional lower film

The same procedure as in Example 1 above was performed to punch lithium metal, except that the lower release film was changed to a release film with the product name 75OS-IR01 (Osung RF).

(* 75OS-IR01: The ingredients are the same as in Example 1 above, but the content of silicone coating the PET base material is 1% by weight based on a total 100% by weight of the lower release film).

### [Comparative Example 2] Punching lithium metal using a conventional lower film

The same procedure as in Comparative Example 1 above was performed to punch the lithium metal, except that the ultrasonic irradiation depth was changed from 0.075 mm to 0.080 mm.

### [Comparative Example 3] Punching lithium metal using a conventional lower film

The same procedure as in Example 1 above was performed to punch lithium metal, except that the lower release film was changed to a release film with the product name 75OS-PE-LH04 (Osung R.F.).

(* 75OS-PE-LH04: The ingredients are the same as in Example 1 above, but the content of silicone coating the PET base material is 3% by weight based on a total 100% by weight of the lower release film).

### [Comparative Example 4] Punching lithium metal using a conventional lower film

The same procedure as in Comparative Example 3 above was performed to punch lithium metal, except that the ultrasonic irradiation depth was changed from 0.075 mm to 0.080 mm.

### [Comparative Example 5] Punching lithium metal using a silicone coated lower film

The same procedure as in Example 1 above was performed to punch the lithium metal, except that the ultrasonic irradiation depth was changed from 0.075 mm to 0.070 mm.

### [Comparative Example 6] Punching lithium metal using a silicone coated lower film

The same procedure as in Example 1 above was performed to punch the lithium metal, except that the ultrasonic irradiation depth was changed from 0.075 mm to 0.090 mm.

### [Experimental Example 1] Measuring release force

To determine the release force of the lower release film itself (i.e., the release force between the PET base material and the coating layer) used in Examples 1 and 2 and Comparative Examples 1 to 6, each was measured several times, and the results are shown in Table 1 below. For the peel force measurement, chem. Instrument's AR-1000 product was used.

**[Table 1]**

| | Release force (gf/in) |
|---|---|
| Example 1 | 8 to 12 |
| Example 2 | 8 to 12 |
| Comparative Example 1 | 60 to 80 |
| Comparative Example 2 | 60 to 80 |
| Comparative Example 3 | 30 to 40 |
| Comparative Example 4 | 30 to 40 |
| Comparative Example 5 | 8 to 12 |
| Comparative Example 6 | 8 to 12 |

As a result of the measurement, the lower release film used in Examples 1 and 2 and Comparative Examples 5 and 6 had a release force of 8 to 12 gf/in, and the lithium metal was easily separated from the lower film without sticking to the lower film after punching lithium metal. In other words, by measuring the release force between the PET base material and the coating layer on the lower release film, it was confirmed that coating the PET base material with silicone prevents the lithium metal from sticking to the lower release film even after punching the lithium metal.

On the other hand, in Comparative Examples 1 to 4, it was observed that when a release film with a high release force of 30 to 80 gf/in as a lower release film, the lithium metal and the bottom release film adhered and stuck together and did not come off easily.

Based on the above release force measurement results, it can be seen that by using a lower release film with a specific content of silicone coating to reduce the release force, the lithium metal does not stick even after ultrasonic irradiation, thereby facilitating easy peeling.

### [Example 2] Observing whether adhesion of lithium metal occurs

In Examples 1 and 2 and Comparative Examples 1 to 6, the lithium metal was separated from the upper and lower films after punching the lithium metal, and whether the lithium metal was adhered to the upper and lower films was visually observed, and the results are shown in Table 2 below.

**[Table 2]**

| | Upper film adhesion | Lower film adhesion | Edge shrinkage | Punchable (detachable) |
|---|---|---|---|---|
| Example 1 | × | × | ○ | ○ |
| Example 2 | × | × | ○ | ○ |
| Comparative Example 1 | × | ○ | △ | ○ |
| Comparative Example 2 | × | ○ | ○ | ○ |
| Comparative Example 3 | × | ○ | ○ | ○ |
| Comparative Example 4 | × | ○ | ○ | ○ |
| Comparative Example 5 | × | × | × | × |
| Comparative Example 6 | ○ | ○ | ○ | × |

Upon observation, in Examples 1 and 2, where the lithium metal was punched using a silicone-coated lower film, the lithium metal was not adhered to both the upper and lower films, which facilitated separation. a in FIG. 2 is an image of the lithium metal of Example 1 after separation from the lower film, and b in FIG. 2 is an image of the lower film after separation of the lithium metal of Example 1 from the lower film. a in FIG. 3 is an image of the punched shape after separation of the lithium metal of Example 2 from the lower film, and b in FIG. 3 is an image of the lower film after separation of the punched lithium metal of Example 2 from the lower film. As shown in FIGs. 2 and 3, when the lithium metal was separated from the lower film, it was confirmed that it was well separated without smearing, and it was observed that there was no problem with the punching.

In the case of Comparative Examples 5 and 6, where the lithium metal was punched using the same silicone-coated lower film as in Examples 1 and 2, the depth of ultrasonic irradiation was beyond the scope of the present invention, and the lithium metal was adhered to the film or, even if it was not adhered, it was not possible to normally separate the lithium metal from the film. a in FIG. 8 is an image of the punched shape after separation of lithium metal of Comparative Example 5 from the lower film, and b in FIG. 8 is an image of the lower film after separation of lithium metal of Comparative Example 5 from the lower film. a in FIG. 9 is an image of the punched shape after separation of lithium metal of Comparative Example 6 from the lower film, and b in FIG. 9 is an image of the lower film after separation of lithium metal of Comparative Example 6 from the lower film.

As shown in FIG. 8, in Comparative Example 5, the lithium metal was separated from the lower film well without smearing, but the depth of ultrasonic irradiation was not deep enough to properly punch the lithium metal. This resulted in a tearing phenomenon when the punched lithium metal was removed and it was not separated according to the shape of the mold (electrode). As shown in FIG. 9, in Comparative Example 6, the depth of ultrasonic irradiation was excessively deep, causing the lower film and the lithium metal to adhere to each other, resulting in burrs across the edge of the electrode. In addition, it was observed that the lithium metal adhered to the lower film without being separated from the lower film. Furthermore, when the lithium metal was attempted to be separated from the lower film by hand, the lithium metal was easily torn off.

All of Comparative Examples 1 to 4, which utilized a conventional lower film, had a common problem of lithium metal adhering to the lower film. a in FIG. 4 is an image of the punched shape after separation of lithium metal of Comparative Example 1 from the lower film, and b in FIG. 4 is an image of the lower film after separation of the lithium metal of Comparative Example 1 from the lower film. a in FIG. 5 is an image of the punched shape after separation of lithium metal of Comparative Example 2 from the lower film, and b in FIG. 5 is an image of the lower film after separation of lithium metal of Comparative Example 2 from the lower film. a in FIG. 6 is an image of the punched shape after separation of lithium metal of Comparative Example 3 from the lower film, and b in FIG. 6 is an image of the lower film after separation of lithium metal of Comparative Example 3 from the lower film. In FIG. 7, a is an image of the punched shape after separation of lithium metal of Comparative Example 4 from the lower film, and in FIG. 7, b is an image of the lower film after separation of lithium metal of Comparative Example 4 from the lower film.

As shown in FIG. 4, Comparative Example 1 showed relatively well separation after punching, but it was seen that some lithium metals were adhered to the lower film. As shown in FIG. 5, Comparative Example 2 had a large amount of punched lithium metal adhering to the lower film and was particularly difficult to remove, while the remaining lithium metal adhered to the upper film and was separable. As shown in FIGs. 6 and 7, Comparative Examples 3 and 4 confirm that the lithium metal was smeared on the lower film even though the depth of ultrasonic irradiation was within the scope of the present invention. Therefore, it can be seen that even if the base material is coated with a silicone coating, the purpose of the present invention can be achieved only if the coating is conducted with a content that is within the scope of the present invention.

## Claims

1. A film for punching lithium metal, provided on a lower portion of the lithium metal when ultrasonically cutting lithium metal, comprising a PET base material; and a silicone coating layer positioned on a surface of the PET base material.

2. The film for punching lithium metal according to claim 1, wherein the content of silicone contained in the silicone coating layer is 4 to 50% by weight, based on the total weight of the film for punching lithium metal.

3. The film for punching lithium metal according to claim 1, wherein the thickness of the silicone coating layer is 0.01 to 25 µm based on a thickness of 50 µm of the PET base material.

4. The film for punching lithium metal according to claim 1, wherein the silicone coating layer comprises at least one of alkenyl polysiloxane and hydrogen polysiloxane.

5. The film for punching lithium metal according to claim 1, wherein the surface of the silicone coating layer is flat or has the form of an embossing with a plurality of projections.

6. The film for punching lithium metal according to claim 1, wherein the silicone coating layer further comprises a crosslinking agent.

7. A method of punching lithium metal, comprising the steps of:
(a) sequentially laminating the film for punching lithium metal according to claim 1, lithium metal, one or more molds, and a upper release film; and
(b) spacing apart an ultrasonic horn positioned on top of the upper release film and irradiating with ultrasonic waves to cut the lithium metal into a shape identical to the shape of the mold.

8. The method of punching lithium metal according to claim 7, wherein the ultrasonic irradiation depth is 0.075 to 0.080 mm.
